# EUROPÄISCHE PATENTSCHRIFT

(11) **EP 4 012 635 B1**
(45) Veröffentlichungstag und Bekanntmachung des Hinweises auf die Patenterteilung: **13.08.2025**
(21) Anmeldenummer: 21209244.9
(22) Anmeldetag: 19.11.2021
(51) Int. Cl.: G06Q 10/08, G05D 1/00

(54) **RETTUNGSMODUS IN SHUTTLE-REGALANORDNUNG**
RESCUE MODE IN SHUTTLE SHELF ARRANGEMENT
MODE DE SECOURS DANS L'AGENCEMENT DE RAYONNAGE DE NAVETTE

(30) Priorität: 14.12.2020 DE 102020133296
(43) Veröffentlichungstag der Anmeldung: 15.06.2022
(73) Patentinhaber: SSI Schäfer Automation GmbH (DE), 97232 Giebelstadt (DE)
(72) Erfinder: Fackelmann, Martin, 97357 Prichsenstadt (DE); Fleckenstein, Otmar, 97993 Creglingen (DE); Müller, Hannes, 97084 Würzburg (DE)
(74) Vertreter: Witte, Weller & Partner Patentanwälte mbB

(56) Entgegenhaltungen:
- WO-A1-2018/086140
- CN-A- 111 812 521
- US-A1- 2017 182 664
- US-A1- 2020 257 295
- US-A1- 2020 387 179
- US-B1- 9 246 749

## Beschreibung

Die vorliegende Offenbarung betrifft ein automatisches Lagersystem mit einer Vielzahl von energieautonomen Fahrzeugen, sowie ein Verfahren zur Wiederinbetriebnahme des automatischen Lagersystems nach einem Energieausfall, der insbesondere in einem parallelen Kommunikationsabbruch resultiert.

Es sind automatische Lagersysteme bekannt, die eine Regalanordnung umfassen, die aus zwei Regalen gebildet wird, die wiederum eine Regalgasse zwischen sich definieren. Die Regale weisen in vertikaler Richtung mehrere Regalebenen übereinander auf, die von einem oder mehreren Regalbediengeräten zum Einlagern und Auslagern von Lagergütern in und aus Regallagerplätze bedient werden.

Die Regalbediengeräte stellen Fahrzeuge dar. Wenn die Fahrzeuge ohne Hubfunktion ausgestaltet sind, handelt es sich um sog. Einebenen-Regalbediengeräte, die auch als "Shuttle" bezeichnet werden. Jedoch gibt es auch Fahrzeuge mit Hubfunktion, so dass die Fahrzeuge mehrere vertikal benachbarte Regalebenen bedienen können. Es sind zum Beispiel Regalbediengeräte bekannt, die zwei bis vier Regalebenen bedienen.

Diese Fahrzeuge können permanent mit einer (externen) Energiequelle verbunden sein, zum Beispiel über eine Schleifleitung, oder energieautonom ausgebildet sein. Energieautonome Fahrzeuge haben einen Energiespeicher an Bord und sind nicht permanent mit der Energiequelle verbunden. Der bordeigene Energiespeicher wird in bzw. auf sog. Ladestationen geladen, indem die (regelmäßig schienengebundenen) Fahrzeuge zur Ladestation fahren, wo Ladekontaktpunkte vorgesehen sind, um das jeweilige Fahrzeug (kurzzeitig) zum Laden mit der Energiequelle zu verbinden.

Jedoch sind die Anforderungen an die Sicherheit höher, wenn energieautonome Fahrzeuge eingesetzt werden. So muss zum Beispiel sichergestellt werden, dass die energieautonomen Fahrzeuge permanent unter der Kontrolle einer übergeordneten Systemsteuerung stehen, damit die Fahrzeuge keine unbeabsichtigten Aktionen durchführen. Dies ist insbesondere wichtig, weil die Fahrzeuge von Bedienpersonen (Menschen) gewartet werden müssen. Im Falle einer (manuellen) Wartung muss der Wartungstechniker die Regalanordnung physisch betreten. In diesem Fall muss sichergestellt sein, dass sich die Fahrzeuge nicht unbeabsichtigt bewegen. Bei Fahrzeugen, die permanent über eine Schleifleitung mit Energie versorgt werden, reicht es aus, die Energieversorgung zu unterbrechen, weil sich die Fahrzeuge in diesem Fall nicht mehr bewegen können. Bei energieautonomen Fahrzeugen reicht diese Maßnahme nicht aus.

Nach einem Stromausfall und einem damit verbundenen Kommunikationsabbruch zwischen den energieautonomen Fahrzeugen und einer übergeordneten Steuerung muss der Betrieb des automatischen Lagersystems schnellstmöglich wieder aufgenommen werden, sobald die Energieversorgung wiederhergestellt ist. Energieautonome Fahrzeuge sind nur eine begrenzte Zeitdauer fahrbereit, weil sich ihr Energiespeicher über die Zeit entlädt. Wenn die energieautonomen Fahrzeuge an beliebigen Positionen innerhalb einer Regalgasse zum Stehen kommen, kann der Betrieb des automatischen Lagersystems nach einer vollständigen Entladung der Fahrzeuge nur durch einen manuellen Eingriff des Wartungstechnikers wiederaufgenommen werden.

Das Dokument DE 20 2020 104 954 U1 betrifft ein Shuttle für ein Regalsystem sowie ein Regalsystem.

Das Dokument AT 516 231 A1 betrifft ein automatisiertes Regallagersystem und Verfahren zum sicheren Betreiben desselben.

Das Dokument US 2017 182 664 A1 betrifft, gemäß seiner Zusammenfassung, Systeme und Verfahren zum Begrenzen der Fähigkeiten eines Roboters während der Teleoperation basierend auf einer Netzwerkverbindungsstärke. Das Verfahren kann das Bestimmen von Ebenen von Operationen beinhalten, die von einem Roboter durchgeführt werden können. Eine oder mehrere Netzwerkstärkeschwellenwerte, die einer oder mehreren der Betriebsebenen des Roboters entsprechen, können ebenfalls bestimmt werden. Der Roboter kann dann die Netzwerkstärke für das Kommunikationsnetzwerk zwischen dem Roboter und einem Fernsteuersystem messen. Basierend auf der gemessenen Netzwerkstärke und den ermittelten Netzwerkstärke-Schwellenwerten können eine oder mehrere der Betriebsebenen zur Auswahl durch das Fernsteuerungssystem freigegeben werden. Der Roboter kann die Netzwerkstärke basierend auf der Netzwerklatenz und/oder der Paketverlustrate bestimmen. Der Roboter kann dem Fernsteuerungssystem eine Benachrichtigung über das Deaktivieren einer zuvor aktivierten Ebene von Operationen aufgrund einer verringerten Netzwerkstärke bereitstellen.

Daher ist es eine Aufgabe der vorliegenden Offenbarung, ein verbessertes automatisches Lagersystem mit energieautonomen Fahrzeugen und ein Verfahren zur automatisierten Wiederaufnahme eines Betriebs bereitzustellen, wobei insbesondere die Sicherheit gewährleistet ist.

Diese Aufgabe wird gelöst durch ein automatisches Lagersystem gemäß Anspruch 1 gelöst.

Wenn die Energie im Lagersystem ausfällt, wird auch ein Kommunikationsnetzwerk, über das die Fahrzeuge mit der Systemsteuerung kommunizieren, nicht mehr mit Energie versorgt. Die Systemsteuerung verliert die Kontrolle über die Fahrzeuge. Dies ist aus einem Gesichtspunkt der Sicherheit kritisch. Um ungewollte Aktionen der Fahrzeuge zu verhindern, werden die Fahrzeuge nach der ersten Zeitdauer T1 in einen autonomen Rettungsmodus geschaltet. Die erste Zeitdauer T1 kann eine Zeitdauer repräsentieren, die üblicherweise für einen Neustart des Kommunikationsnetzwerks benötigt wird. Die erste Zeitdauer beträgt z.B. 35 Sekunden. Nach Ablauf dieser Zeit wechseln die Fahrzeuge in einen Rettungsmodus, in dem sie sich kurzzeitig ohne die Kontrolle der Systemsteuerung bewegen dürfen. Im Rettungsmodus sind die Fahrzeuge autonom. Dies bedeutet, dass die Fahrzeuge unter eigener Kontrolle bewegt werden dürfen. Im Rettungsmodus können die Fahrzeuge auf ihre Ladestation gefahren werden.

Spätestens wenn sich die Fahrzeuge auf ihren Ladestationen befinden, besteht auch (wieder) ein physischer Kontakt zwischen den Fahrzeugen und der übergeordneten Systemsteuerung. Die Systemsteuerung wird durch diese Maßnahme in die Lage versetzt, Informationen über das jeweilige Fahrzeug zu erlangen.

Außerdem können die Energiespeicher der Fahrzeuge wieder geladen werden, sobald der Energieausfall beendet ist.

Die Fahrzeuge befinden sich nach dem Ende des Energieausfalls an klar vorbestimmten Positionen, nämlich auf ihren Ladestationen. Der Wartungstechniker kann durch eine bloße Besichtigung von außen verifizieren, ob sich die Fahrzeuge während des Energieausfalls regelkonform verhalten haben. Solche Fahrzeuge, die nicht auf ihren Ladestationen positioniert sind, haben sich nicht regelkonform verhalten, so dass die Gefahr besteht, dass bei diesen Fahrzeugen ein sicherheitsrelevanter Fehler aufgetreten ist. Dies kann der Wartungstechniker durch eine bloße Betrachtung von außen feststellen, ohne die Regalgasse betreten zu müssen.

Der oben beschriebene Zustand lässt sich aber auch auf der Ebene der Systemsteuerung virtuell verifizieren, ohne dass der Wartungstechniker das System physisch inspiziert. Nach dem Energieausfall melden die Fahrzeuge ihre aktuelle Position an die Systemsteuerung zurück. Wenn die aktuelle Position nicht mit der Position der zugeordneten Ladestation übereinstimmt, liegt wahrscheinlich ein Fehler vor, der eine manuelle Inspektion erfordert. Anderenfalls kann das Lagersystem automatisch wieder in Betrieb genommen werden.

Vorzugsweise wird der Pairing-Vorgang veranlasst, sobald die Kommunikation mit der Systemsteuerung wiederhergestellt ist und sobald eine Versorgung des entsprechenden Fahrzeugs mit Energie über die Ladestation besteht.

Es ist möglich, dass die Kommunikation aus einem anderen Grund unterbrochen wird, der nicht durch einen Energieausfall verursacht ist. Auch in diesem Fall fahren die Fahrzeuge nach dem Ablauf der ersten vorbestimmten Zeitdauer T1 auf ihre Ladestation zurück, um den (Re-) Pairing-Vorgang durchzuführen. Dieser Zustand ist wiederum optisch erkennbar, weil das oder die Fahrzeuge von allein auf ihre Ladestation fahren.

Wenn die Energie jedoch für eine sehr lange Zeit ausfällt, kann der Pairing-Vorgang erst dann durchgeführt werden, wenn die (entladenen) Fahrzeuge wieder über ausreichend Energie verfügen, um die Fahrzeug-Steuerung neu zu starten, um insbesondere die Kommunikation mit der Systemsteuerung auf Basis der Initial-Pairing-Daten wiederaufzubauen.

Der Pairing-Vorgang wird basierend auf den Initial-Pairing-Daten durchgeführt, die eine Ortsadresse und eine (eindeutige) Kennung des Fahrzeugs umfassen, die einander fest und eindeutig zugewiesen sind, und wobei die Initial-Pairing-Daten in einem Permanentspeicher des Fahrzeugs hinterlegt sind.

Die Initial-Pairing-Daten ordnen dem jeweiligen Fahrzeug einen Ort in der Regalanordnung zu. Diese Information kann bei der Wiederinbetriebnahme des Lagersystems genutzt werden. Das jeweilige Fahrzeug muss nicht erneut initialkonfiguriert werden. Der Pairing-Vorgang nutzt also bereits hinterlegte Daten, ohne dass manuell eingegriffen werden muss.

Diese Daten sind in einem Teil des Datenspeichers des Fahrzeugs hinterlegt, den eine CPU (Fahrzeug-Steuerung) des Fahrzeugs nicht zum normalen Arbeiten nutzt. Diese Daten können in einem besonders geschützten Speicherbereich hinterlegt sein. Diese Daten gehen auch bei sehr lange andauernden Energieausfällen nie verloren, obwohl sich der Energiespeicher des Fahrzeugs vollständig entlädt.

Die Kommunikation erfolgt vorzugsweise drahtlos, insbesondere über WLAN.

Da das Fahrzeug energieautonom ist, besteht keine permanente physische (Daten-) Verbindung zur Systemsteuerung. Die Kommunikation erfolgt also über ein lokales Funknetzwerk, insbesondere über WLAN. Beim Energieausfall im gesamten Lagersystem fällt somit auch die Kommunikation aus. Die Systemsteuerung verliert die Kontrolle über das jeweilige Fahrzeug. Dennoch ist es möglich, das jeweilige Fahrzeug automatisch zu seinem Referenzpunkt (Ladestation) zu verfahren, ohne die Sicherheit zu gefährden.

Ferner ist es möglich, dass die Datenspeicher der Fahrzeuge jeweils einen nicht flüchtigen Bereich zur Speicherung von Initial-Pairing-Daten und einen flüchtigen Bereich zum Arbeiten für die jeweilige Fahrzeug-Steuerung aufweisen.

Die für den Pairing-Vorgang relevanten Daten befinden sich in einem anderen Speicherbereich als der Arbeitsspeicher der CPU. Dies verringert eine Fehleranfälligkeit. Die für den Pairing-Vorgang relevanten Daten können nicht mit Daten überschrieben werden, die die CPU der Fahrzeuge zum Arbeiten benötigt. Dies erhöht die Sicherheit.

Vorzugsweise weisen die Energiespeicher der Fahrzeuge jeweils einen Schnelllade-Energiespeicher für Energie zum Bewegen des jeweiligen Fahrzeugs und einen (getrennt angeordneten) Stütz-Energiespeicher für Energie zum Aufrechterhalten von gespeicherten Daten und zum Ausführen von Notfunktionen durch die Fahrzeug-Steuerung auf.

Der Stütz-Energiespeicher stellt sicher, dass die für den Pairing-Vorgang relevanten Daten sehr lange im Fahrzeug vorgehalten werden können. Das Fahrzeug ist bei einem sehr langen Energieausfall möglicherweise nicht mehr in der Lage, sich zu bewegen. Jedoch ist ausreichend Energie vorhanden, um die Kommunikation wieder zu errichten, die zur automatisierten Wiederinbetriebnahme des Lagersystems erforderlich ist, ohne dass der Wartungstechniker manuell eingreifen muss.

Des Weiteren wird die Aufgabe gelöst durch ein Verfahren gemäß Anspruch 6 zur Wiederinbetriebnahme eines automatischen Lagersystems.

Durch dieses Fahren lassen sich die Vorteile erzielen, die oben im Zusammenhang mit dem Lagersystem bereits beschrieben wurden.

Der Pairing-Vorgang erfolgt auf Basis von Initial-Pairing-Daten, die in einem Datenspeicher des jeweiligen Fahrzeugs permanent hinterlegt sind, wobei eine InitialKonfiguration des jeweiligen Fahrzeugs die Initial-Pairing-Daten aufweist, die eine Kennung des jeweiligen Fahrzeugs und eine Ortsadresse des jeweiligen Fahrzeugs umfassen, die einander initial zugewiesen wurden.

Insbesondere kann der Schritt eines Veranlassens eines Pairing-Vorgangs aufweisen, dass das jeweilige Fahrzeug eine charakteristische Interaktion mit der ihm zugeordneten Ladestation durchführt und dass die Ortsadresse des jeweiligen Fahrzeugs mit einer Ortsadresse verglichen wird, die der entsprechenden Ladestation zugewiesen ist, die ein charakteristisches Zustandssignal in Reaktion auf die charakteristische Interaktion des jeweiligen Fahrzeugs liefert.

Vorzugsweise wird ein charakteristischer Ladestrom betrachtet. Die Fahrzeuge werden sukzessive hinsichtlich der in den Fahrzeugen hinterlegten Daten verifiziert. Die Verifikation erfolgt durch die Systemsteuerung. Dies erhöht die Sicherheit. Die Systemsteuerung vertraut nicht allein auf die Daten, die das entsprechende Fahrzeug liefert. Die Systemsteuerung verifiziert, ob die im Fahrzeug hinterlegten Daten mit den Daten übereinstimmen, die in der Systemsteuerung hinterlegt sind. Auf diese Weise wird verifiziert, dass die Daten, die im Fahrzeug hinterlegt sind, während des Energieausfalls nicht geändert wurden, so dass auf eine erneute Initialkonfiguration bei der Wiederinbetriebnahme des Lagersystems verzichtet werden kann.

Vorzugsweise wechselt das jeweilige Fahrzeug nach Ablauf einer zweiten vorbestimmten Zeitdauer T2, die sich an die erste vorbestimmte Zeitdauer T1 anschließt, in einen antriebslosen Betriebsmodus.

Im antriebslosen Betriebsmodus sind die (elektrischen) Antriebe der Fahrzeuge drehmomentlos geschaltet. Dieser Betriebsmodus kann nur von der Systemsteuerung geändert werden. Dies bedeutet mit anderen Worten, dass ein Fahrzeug, das sich in einem antriebslosen Betriebsmodus befindet, nicht von allein bewegt werden kann, insbesondere nicht durch die Fahrzeug-Steuerung selbst. Dies erhöht die Sicherheit. Ein Wartungstechniker kann also einen Bereich betreten, wo das Fahrzeug normalerweise fährt.

Insbesondere weist das Verfahren ferner auf: periodisches Prüfen, ob die Kommunikation zwischen der jeweiligen Fahrzeug-Steuerung und der Systemsteuerung nach der Unterbrechung wiederhergestellt ist.

Vorzugsweise weist das Verfahren ferner auf: Anfordern eines Freigabe-Signals durch die jeweilige Fahrzeug-Steuerung bei der Systemsteuerung, nachdem die Kommunikation wiederhergestellt ist.

Die Anforderung einer Freigabe durch die Systemsteuerung stellt sicher, dass sich das Fahrzeug nicht von allein bewegt bzw. wieder in einen Automatikmodus wechselt, der erhöhte Anforderungen an die Sicherheit stellt. Erst wenn die Systemsteuerung die Daten des Fahrzeugs überprüft hat und sicher ist, dass die im Fahrzeug hinterlegten Daten zu den Daten passen, die in der Systemsteuerung hinterlegt sind, wird die Freigabe erteilt.

Insbesondere wird ein Kommunikationsabbruch vom jeweiligen Fahrzeug in seinem Datenspeicher protokolliert.

Die Protokollierung des Kommunikationsabbruchs kann von der Systemsteuerung zum Feststellen benutzt werden, ob das entsprechende Fahrzeug einen Fahrauftrag, den das Fahrzeug während des Kommunikationsabbruchs hatte, vollständig ausgeführt hat oder nicht. Diese Information ist insbesondere für einen Materialflussrechner wichtig, um zu entscheiden, ob der Fahrauftrag erneut vergeben werden muss oder erledigt ist.

Vorzugsweise weist das Verfahren ferner auf: Überprüfen, ob das jeweilige Fahrzeug auf der vorab zugeordneten Ladestation positioniert ist, nachdem das jeweilige Fahrzeug in den Rettungsmodus gewechselt hat.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: ein Blockdiagramm eines Lager- und Kommissioniersystems;
- Fig. 2: ein Blockdiagramm eines Fahrzeugs, einer Systemsteuerung und einer Station;
- Fig. 3: eine exemplarische Zuordnungstabelle, während einer Initialkonfiguration;
- Fig. 4: ein Flussdiagramm eines Verfahrens zur Wiederinbetriebnahme eines automatisierten Lagersystems; und
- Fig. 5: ein Schaubild zu zeitlichen Abläufen.

Die vorliegende Offenbarung kommt in intralogistischen Systemen zum Einsatz.

Der Gegenstand der Offenbarung eröffnet die Möglichkeit, nach einem Energieausfall, der folgerichtig auch in einem Kommunikationsausfall resultiert, eine erneute Zuordnung zwischen physikalischen Adressen und logischen Adressen (z.B. IP-Adressen) von Fahrzeugen im intralogistischen System "sicher" vorzunehmen.

Es muss sichergestellt werden, dass der Ort, an dem sich ein Fahrzeug - für eine Systemsteuerung - vermeintlich aufhält, mit dem Ort überstimmt, wo sich das Fahrzeug tatsächlich aufhält. Der Ort, an dem sich das Fahrzeug vermeintlich aufhält, ist mit dem Ort gleichzusetzen, von dem die Systemsteuerung meint, dass sich das Fahrzeug dort aufhält. Diese Verifikation ist insbesondere für eine automatisierte Wiederaufnahme eines Betriebs des Systems nach einem Energieausfall notwendig.

Insbesondere stellt eine physikalische Adresse eine Adresse eines Orts (Ortsadresse) dar, wo das entsprechende Fahrzeug innerhalb des Systems lokalisiert ist, und die logische Adresse stellt insbesondere eine Kommunikationsadresse (z.B. eine IP-Adresse) dar, über welche ein Fahrzeug angesprochen wird, um Daten auszutauschen.

Die Intralogistik befasst sich generell mit einer Organisation, Steuerung und Durchführung und Optimierung eines innerbetrieblichen Materialflusses, von Informationsströmen sowie eines Warenumschlags z.B. in Industrie, Handel und öffentlichen Einrichtungen.

Die nachfolgende Beschreibung erfolgt exemplarisch unter Bezugnahme auf ein kartesisches Koordinatensystem XYZ, wobei X eine Längsrichtung, Y eine Höhenrichtung und Z eine Querrichtung bezeichnen, wie es in der Intralogistik üblich ist.

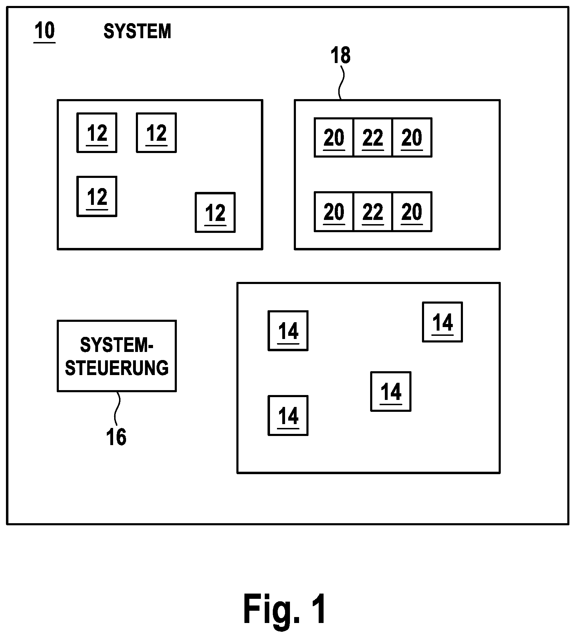

Fig. 1 zeigt ein Blockdiagramm eines Lagersystems (nachfolgend auch kurz bezeichnet als "System") 10, wo Lagergüter gelagert werden. Das Lagersystem 10 kann Teil eines nicht näher gezeigten Kommissioniersystems sein, wo die gelagerten Güter kommissioniert werden.

Das System 10 weist mindestens ein Fahrzeug 12 und vorzugsweise eine Vielzahl von Fahrzeugen 12 auf. Das System weist ferner mindestens eine Station 14 und vorzugsweise eine Vielzahl von Stationen 14 auf. Schließlich weist das System 10 auch eine Systemsteuerung 16 auf, die vorzugsweise auch die Funktion einer Zutrittssteuerung umfasst. Zutrittssteuerungen stellen in automatisierten Systemen sicher, dass Menschen, die sich Zutritt zu den Systemen verschaffen, nicht von automatisiert betriebenen Maschinen verletzt werden können.

Das System 10 weist ferner eine Regalanordnung 18 mit mindestens zwei parallel zueinander angeordneten Regalen 20 auf, die eine (nicht dargestellte) Regalgasse 22 zwischen sich definieren, wie es bekannt ist.

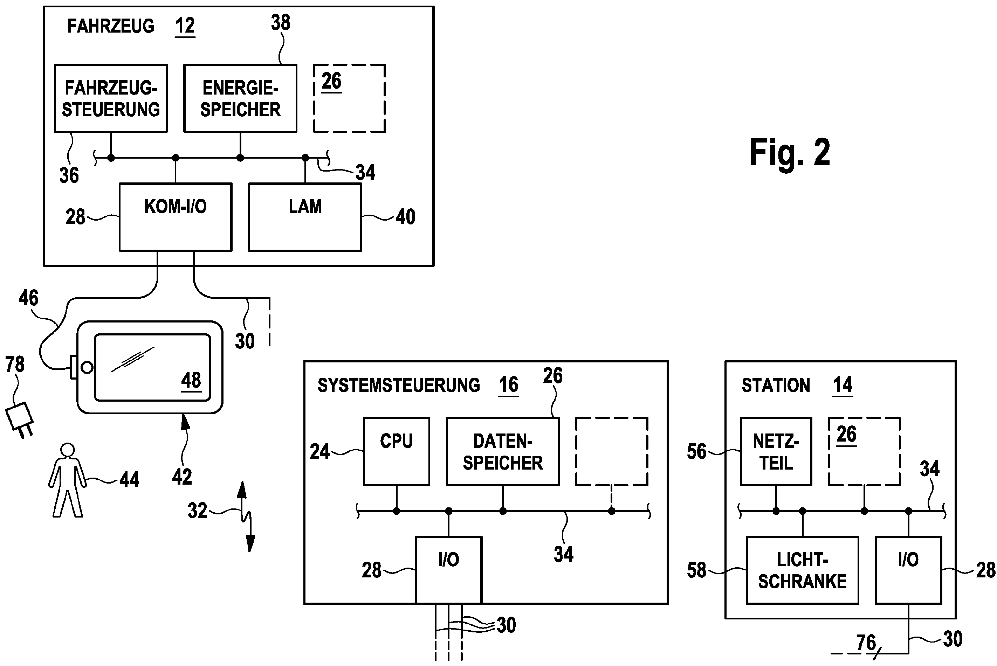

Fig. 2 zeigt ein Blockdiagramm der Systemsteuerung 16. Die Systemsteuerung 16 umfasst eine oder mehrere Datenverarbeitungseinrichtungen 24, einen oder mehrere Datenspeicher 26 sowie eine oder mehrere Schnittstellen (I/O) 28, um mit Entitäten des Systems 10, wie z.B. mit den Fahrzeugen 12 und den Stationen 14, zu kommunizieren, indem Daten ausgetauscht werden. Die Kommunikation erfolgt über feste Leitungen 30 und/oder drahtlose Verbindungen 32. Die Kommunikation zwischen der Systemsteuerung und den Fahrzeugen 12 erfolgt insbesondere drahtlos, z.B. über WLAN unter Verwendung von TCP/IP.

Die Systemsteuerung 16 kann zentral oder dezentral implementiert sein.

Die Systemsteuerung 16 kann eine oder mehrere der folgenden Funktionen implementieren: eine Lagerverwaltung, insbesondere Lagerplatzverwaltung; eine Mengenverwaltung (Bestandsführung); eine Materialflusssteuerung; eine Erfassung, Aufbereitung und Visualisierung von Daten; Kommissionierstrategien; Optimierungen (z.B. bezüglich Transport, Kommissionierreihenfolge, Routenplanung, Batchbildung und dergleichen); und/oder eine Zutrittssteuerung. Es versteht sich, dass diese Aufzählung nicht abschließend ist und andere intralogistische relevanten Funktionen ebenfalls umfasst sein können.

Die Datenverarbeitungseinrichtung 24, der Speicher 26 und die Schnittstelle 28 der Systemsteuerung 16 sind z.B. über ein Bussystem 34 miteinander verbunden.

Fig. 2 zeigt ferner exemplarisch ein Blockdiagramm von einem der Fahrzeuge 12. Die nachfolgende Beschreibung gilt generell auch für mehrere Fahrzeuge12. Jedes Fahrzeug 12 des Systems 10 weist zumindest einen Datenspeicher 26, eine Fahrzeugsteuerung 36 und eine Kommunikationsschnittstelle 28 auf. Ferner weisen die Fahrzeuge 12 einen Energiespeicher 38 (z.B. Akku, Kondensator, PowerCap, etc.) auf, um energieautonom betrieben zu werden. Dies bedeutet, dass die Fahrzeuge 12 nicht permanent an eine Energieversorgungsleitung (nicht dargestellt) gekoppelt sind, während sich die Fahrzeuge 12 in den Regalgassen bewegen. Die Fahrzeugsteuerung 36 umfasst ebenfalls eine CPU und Programme, die im Speicher 26 hinterlegt sind und von der CPU ausgeführt werden, um z.B. die Lagergüter gemäß Transportaufträgen ein- und auszulagern, eine Kommunikation mit der Systemsteuerung 16 zu überwachen, Notfallprozeduren auszuführen und Ähnliches.

Die Fahrzeuge 12 sind regalgebunden, d.h. sie fahren zwangsgeführt auf oder in Schienen (nicht gezeigt), die an den Regalen 20 angebracht sind.

Ferner können die Fahrzeuge 12 jeweils ein Lastaufnahmemittel (LAM) 40 zum Ein- und Auslagern der Lagergüter aufweisen.

Es versteht sich, dass jedes der Fahrzeuge 12 weitere Komponenten aufweisen kann, wie z.B. einen Fahrantrieb, Räder, ein Gestell, Sensoren, einen schaltbaren Entladungswiderstand und dergleichen, die hier zur Vereinfachung der Darstellung aber nicht näher betrachtet werden.

Die Kommunikationsschnittstelle 28 des Fahrzeugs 12 ist mit der Schnittstelle 28 der Systemsteuerung 16 verbindbar. Die Schnittstelle 28 des Fahrzeugs 12 ist ferner eingerichtet, mit einem Datenterminal 42 (z.B. Laptop, Tablet-PC, mobiles Datenterminal, oder dergleichen) verbunden zu werden.

Das Datenterminal 42 ist eine tragbare Einheit, die eine Bedienperson (z.B. ein Wartungstechniker) mit sich tragen kann. In der Fig. 2 ist das Datenterminal 42 z.B. über ein Kabel 46 mit der Schnittstelle 28 des Fahrzeugs 12 physisch verbunden. Es versteht sich, dass diese Verbindung auch in Form einer Drahtlosverbindung 32 (z.B. WiFi) erfolgen kann.

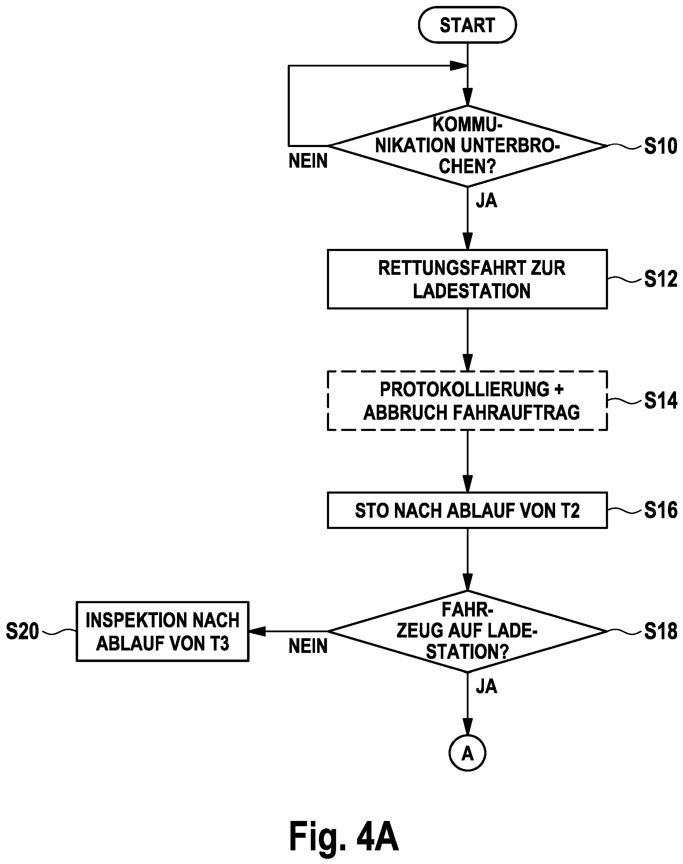

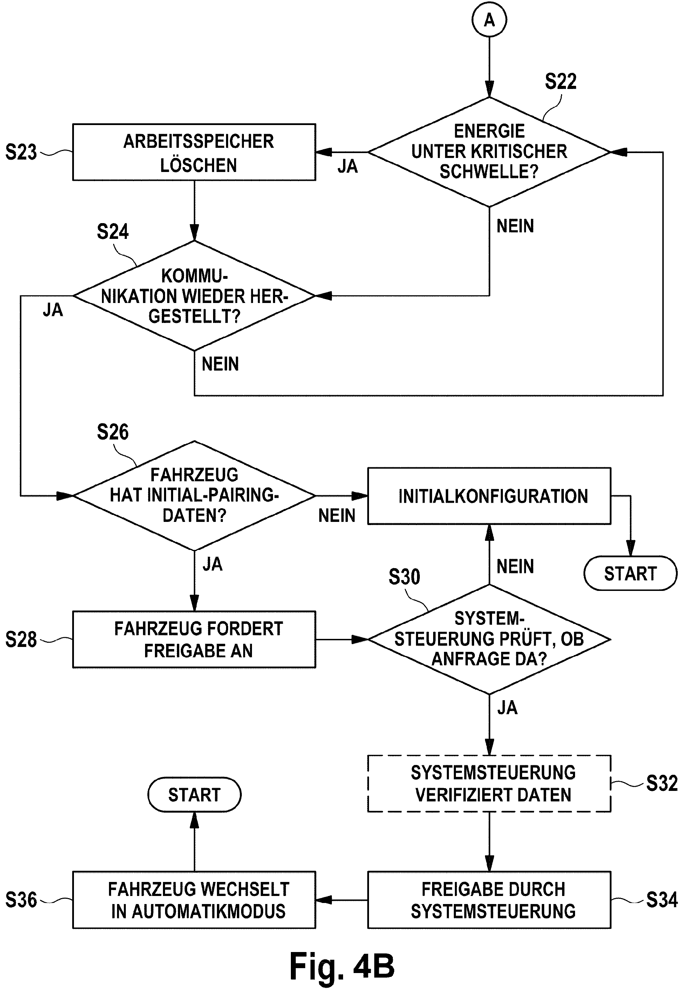

Das Datenterminal 42 weist vorzugsweise eine visuelle Anzeige 48 und eine (nicht näher gezeigte) Eingabeeinrichtung 50 (z.B. Tastatur, Mikrofon, Touch-Panel, oder dergleichen) auf. Über die Anzeige 48 kann der Bedienperson 44 eine Konfigurationsmaske angezeigt werden, mit deren Hilfe die Bedienperson 44 Konfigurationsdaten, wie z.B. eine Fahrzeug-ID 52, d.h. eine fahrzeugspezifische Kennung, eine spezifische Ortsadresse 54, d.h. eine ortsspezifische bzw. physikalische Adresse, und dergleichen, auswählen und eingeben kann, wie es im Zusammenhang der Fig. 4 der DE 10 2018 132 814 B3 bereits beschrieben ist, auf die hier Bezug genommen wird. In diesem Dokument ist auch eine Initialkonfiguration beschrieben, auf die hier ebenfalls Bezug genommen wird und gemäß der auch vorliegend automatisiert verifiziert werden kann, ob eine im Fahrzeug 12 (initial) hinterlegte Ortsadresse mit einer Ortadresse übereinstimmt, die einer der Stationen 14 zugewiesen ist, die mit diesem Fahrzeug 12 interagieren kann. Vorzugsweise handelt es sich dabei um eine Regalgassen- und Regalebenen-spezifische Ladestation 14, über die das Fahrzeug 12, das dieser Regalgasse und dieser Regalebene zugewiesen ist, geladen wird.

Ferner ist in der Fig. 2 exemplarisch eine der Stationen 14 gezeigt. Die Station 14 weist ebenfalls eine (Kommunikations-)Schnittstelle 28 auf, um mit den Schnittstellen 28 der Systemsteuerung 16 und/oder der Fahrzeuge 12 zu kommunizieren, d.h. Daten auszutauschen. Jede Station 14 kann je nach Stationstyp ein Netzteil 56, eine Lichtschranke 58 und/oder andere Sensoren und/oder Aktoren aufweisen. Nachfolgend werden vorzugsweise Ladestationen 14 betrachtet, die jeweils ein Netzteil 56 aufweisen, um die Energiespeicher 38 der Fahrzeuge 12 zu laden, wenn das entsprechende Fahrzeug 12 auf der Ladestation 14 positioniert ist.

Jeder Station 14 ist eine (hier nicht gezeigte) Stations-ID 60 (vgl. Fig. 4), d.h. eine stationsspezifische Kennung, zugeordnet. Die Stations-ID 60 kann in einem (Daten-) Speicher 26 der Station 14 hinterlegt sein, so wie die Fahrzeug-ID 52 im Speicher 26 der Fahrzeuge 12 hinterlegt ist.

Die Regale 20 weisen in der Y-Richtung Regalebenen RE1 bis REn auf, wobei n eine ganze Zahl größer null ist. Die erste Regalebene RE1 ist üblicherweise die unterste Regalebene. Die Regalebene RE umfassen eine Vielzahl von Regalplätzen, wo die Lagergüter im Regal 20 gelagert werden. Vorzugsweise wird jede Regalebene RE jeweils einem der Fahrzeuge 12 bedient, das in der Regalgasse 22 horizontal in der X-Richtung verfahrbar ist.

Jede Regalebene RE, wo eines der Fahrzeuge 12 vorgesehen ist, ist mit einer Ladestation 14 ausgerüstet, um die energieautonomen Fahrzeuge 12 von Zeit zu Zeit zu laden. Die Ladestationen 14 können in der X-Richtung an beliebigen Orten innerhalb der Regalgasse 22 positioniert werden. Vorzugsweise stellen die Orte der Ladestationen 14 einen Referenzpunkt (Nullpunkt) für das jeweilige Fahrzeug 12 dar. Dies bedeutet, dass der Nullpunkt für eine horizontale Fahrt der Fahrzeuge 12 in der X-Richtung in die Ladestation 14 referenziert ist.

Die Fahrzeuge 12 stellen Regalbediengeräte (RGB), insbesondere Einebenen-RBG (Shuttle), dar.

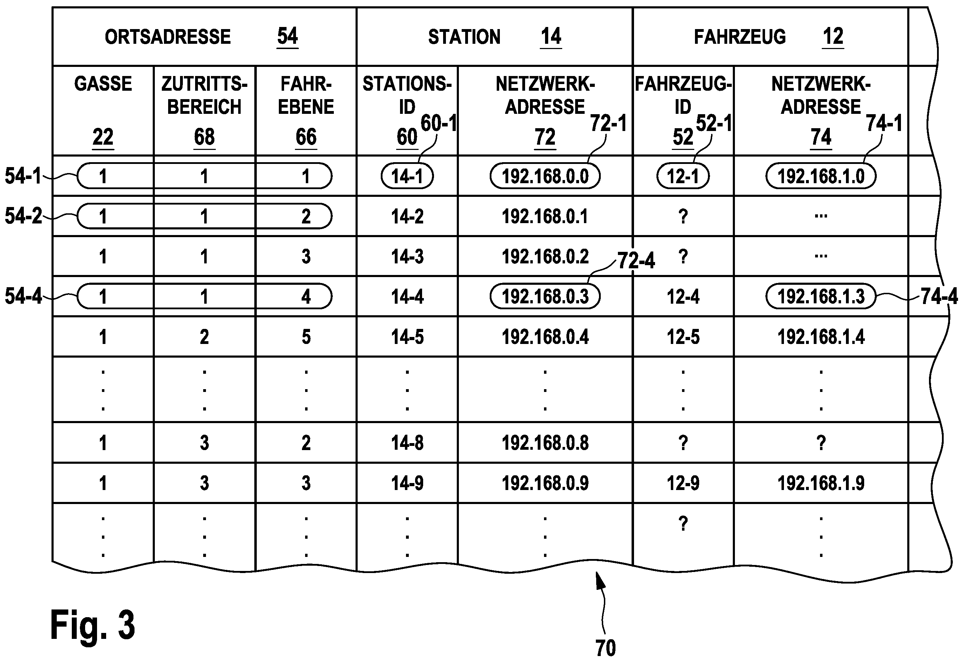

Die Regalanordnung 18 kann ferner in nicht näher bezeichnete und gezeigte Zutrittsbereiche 68 (nicht gezeigt) unterteilt sein, so dass sich eine Konfigurations- oder Zuordnungstabelle 70 ergibt, die in der Fig. 3 gezeigt ist.

Fig. 3 zeigt eine exemplarische Konfigurations- bzw. Zuordnungstabelle 70. Die Tabelle 70 der Fig. 3 kann im Datenspeicher 26 der Systemsteuerung 16 (vgl. Fig. 2) hinterlegt sein. Teile der Tabelle 70 können auch parallel im Fahrzeug-(Daten-)Speicher 26 hinterlegt sein, insbesondere die Initial-Pairing-Daten, die einander zugeordnete Ortsadressen 54 und Fahrzeug-IDs 52, wie z.B. die Ortsadresse 54-1 und die Fahrzeug-ID 52-1, umfassen.

Insbesondere umfasst die Tabelle 70 der Fig. 3 im Wesentlichen drei Informationsgruppen, nämlich Informationen zu (spezifischen) Ortsadressen 54, Informationen zu den Stationen 14 und Informationen zu den Fahrzeugen 12.

Bei den Stationen 14 handelt es sich vorzugsweise um die Ladestationen 14, wobei auf jeder Fahrzeug-betriebenen Regalebene RE mindestens eine der Ladestationen 14 vorgesehen ist. Die Ladestationen 14 können z.B. (in der Längsrichtung X) am Anfang der jeweiligen Fahr- bzw.- Regalebene RE vorgesehen sein. Es versteht sich, dass die Ladestationen 14, insbesondere deren Ladekontakte, auch an einem anderen Ort entlang der jeweiligen Fahrebene 66 vorgesehen sein können. Ferner versteht es sich, dass mehr als eine Ladestation 14 pro Fahrebene 66 vorgesehen sein kann. Zur Vereinfachung der nachfolgenden Erläuterung wird davon ausgegangen, dass pro Fahrebene 66 immer nur eine Station 14 vorgesehen ist. Dies bedeutet, dass der jeweilige Ort der Stationen 14 fest definiert ist.

Die Station 14, die der untersten, ersten Fahrebene 66-1 eines ersten Zutrittsbereichs 68-1 der ersten Regalgasse 22-1 zugeordnet ist, weist eine spezifische Stations-ID 60-1 mit dem Inhalt "14-1" auf. Jede Stations-ID 60 ist ein einziges Mal innerhalb des Systems 10 vergeben und bezeichnet die zugehörige Station 14 eineindeutig. Die spezifische Stations-ID 60 selbst stellt bereits eine logische Adresse dar, unter welcher die entsprechende Station 14 von der Systemsteuerung 16 ansprechbar ist. Der ersten Station 14-1 kann ergänzend oder alternativ eine weitere logische Adresse in Form einer (Stations-) spezifischen Netzwerkadresse 72 zugewiesen sein.

In der Fig. 3 sind die spezifischen Netzwerkadressen 72 der Stationen 14 z.B. durch (exemplarisch lokale) IP-Adressen implementiert. Die spezifischen Netzwerkadressen 72 der Station 14 umspannen in diesem Fall den Adressbereich "192.168.0.0" bis "192.168.0.255". Um diese lokalen IP-Adressen von anderen lokalen IP-Adressen und anderen Gassen 22 zu unterscheiden, könnte die Gasse 22-1 einen (nicht dargestellten und nicht näher bezeichneten) Controller aufweisen, der wiederum mit einer globalen IP-Adresse verknüpft sein könnte, um die Eindeutigkeit der Adresse wieder herzustellen. Dies bedeutet, dass jede der Gassen 22 des Systems 10 mit einem eigenen Controller versehen sein könnte, um alle Stationen 14 des Systems 10 eindeutig ansprechen zu können.

Zurückkehrend zur Tabelle 70 der Fig. 3 ist der ersten Station 14-1 die spezifische Ortsadresse 54-1 mit dem Inhalt "111" zugeordnet. Der Inhalt "111" bringt zum Ausdruck, dass sich die Station 14-1 in der ersten Gasse 22-1 innerhalb des ersten Zutrittsbereichs 68-1 in der ersten Fahrebene 66-1 befindet.

Dieser spezifischen Ortsadresse 54-1 ist das erste Fahrzeug 12-1 bzw. das erste Shuttle zugeordnet. Das erste Fahrzeug 12-1 weist eine spezifische Fahrzeug-ID 52-1 auf, deren Inhalt "12-1" ist. Generell gilt wiederum, dass auch die Fahrzeug-IDs 52 logische Adressen sind. Ergänzend oder alternativ kann dem ersten Fahrzeug 12-1 bzw. dem ersten Shuttle auch eine spezifische Netzwerkadresse 74 zugeordnet sein. Im Beispiel der Fig. 3 wird wiederum eine lokale IP-Adresse z.B. aus dem Bereich "192.168.1.0" bis 192.168.1.255" gewählt. Die spezifische Netzwerkadresse 74-1 des ersten Fahrzeugs 12-1 lautet "192.168.1.0".

Im ersten Zutrittsbereich 68-1 der Fig. 3 ist neben der ersten Fahrebene 66-1 des Weiteren die vierte Fahrebene 66-4 bereits mit dem Shuttle bzw. dem Fahrzeug 12-4 bestückt. Dies drückt sich in der Tabelle 70 durch den vierten Datensatz bzw. die vierte Zeile von oben aus. Die vierte Zeile umfasst die spezifische Ortsadresse 54-4 (mit dem Inhalt "114"), der die vierte Station 14-4 und das vierte Fahrzeug 12-4 zugeordnet sind. Der vierten Station 14-4 ist die spezifische Netzwerkadresse 72-4 (192.168.0.3) zugeordnet. Dem Fahrzeug 12-4 ist die spezifische Netzwerkadresse 74-4 (192.168.1.3) zugeordnet.

Ähnliches gilt für das fünfte Shuttle (vgl. fünfte Zeile der Tabelle 70 in Fig. 3) und das neunte Shuttle (vgl. neunte Zeile der Tabelle 70 in Fig. 3). Der Tabelle 70 der Fig. 3 ist ferner zu entnehmen, dass den restlichen Fahrebenen (noch) keine Fahrzeuge 12 zugeordnet sind.

Ein Initialkonfigurationsvorgang wird nachfolgend beschrieben werden. Dabei versteht es sich, dass sowohl die Stations-ID 60 als auch die Fahrzeug-ID 52 in der Praxis nicht aufsteigend geordnet in der Tabelle 70 vorliegen werden. In der Praxis wird eine Bedienperson 44 (z.B. ein Mechaniker) die Stationen 14 und die Fahrzeuge 12 willkürlich über die Regalebenen RE verteilen.

Ziel der Konfiguration ist es, die Tabelle 70 der Fig. 3 zu vervollständigen, insbesondere jedem Fahrzeug 12 sicher eine spezifische Ortsadresse 54 zuzuweisen. Dies bedeutet insbesondere, dass den Fahrzeugen 12 - sicher - einer der Orte, d.h. eine der spezifischen Ortsadressen 54, zugewiesen wird. Dabei wird vorausgesetzt, dass die Zuweisung zwischen den spezifischen Ortsadressen 54 und den Stationen 14 bereits (sicher) erfolgt ist. Dies bedeutet, dass den Stationen 14 bereits sicher ihre jeweiligen Orte bzw. zugeordneten Fahrebenen 66 in Form der spezifischen Ortsadressen 54 zugewiesen wurden.

Die Aufgabe der Bedienperson 44 ist es dann, die (leeren) Fahrebenen 66 mit Fahrzeugen 12 zu bestücken, indem den neu in die Regalgasse 22-1 bzw. in die leeren Fahrebenen 66 eingesetzten Fahrzeugen 12 die richtigen spezifischen Ortsadressen 54 zugeordnet werden.

Die spezifischen Ortsadressen 54 definieren Fahrbereiche bzw. Bewegungsbereiche der Fahrzeuge 12. Generell ist jedem Fahrbereich mindestens eine Station 14 zugeordnet, so dass über die spezifische Ortsadresse 54 der entsprechenden Station 14 eine Zuordnung eines Orts für ein neu in die Gasse 22 eingesetztes Fahrzeug 12 erfolgen kann.

Um den Zutrittsbereich 68-1 vollständig zu füllen, sind also zwei weitere Fahrzeuge 12 in die Fahrebenen 66-2 und 66-3 einzusetzen. Zu diesem Zweck bewegt sich die Bedienperson 44 zum ersten Zutrittsbereich 68-1. Sobald die Bedienperson 44 dort angekommen ist, kann die Bedienperson 44 der (übergeordneten) Systemsteuerung 16 z.B. mittels des mitgeführten Datenterminals 42 signalisieren, dass ein neues Fahrzeug 12 z.B. in die zweite Regalebene RE2 eingesetzt werden soll.

Die Systemsteuerung 16 kann dann veranlassen, dass die bereits installierten Fahrzeuge 12-1 und 12-4 z.B. auf ihre (Lade-)Stationen 14 fahren und dort verharren. Sobald die Fahrzeuge 12-1 und 12-4 auf ihren Ladestationen 14 angekommen sind, werden diese Fahrzeuge 12 geladen. Die Systemsteuerung 16 erfasst entsprechende Ladeströme oder -spannungen, die an den Netzteilen 56 (vgl. Fig. 1) dieser Station 14 abgegriffen werden können. Diese Ladeströme bzw. Ladespannungen repräsentieren Zustandsänderungen der jeweiligen Stationen 14.

Die Stationen 14 sind jeweils eingerichtet, (spezifische) Zustandssignale 76 (vgl. Fig. 2) an die übergeordnete Systemsteuerung 16 zu übertragen. Diese Zustandssignale 76 sind (Stations-)spezifisch, weil z.B. die zugehörige Stations-ID 60 (vgl. Fig. 4) mitübertragen wird. Die mitübertragene Stations-ID 60 ermöglicht eine Identifizierung der sendenden Station 14. Dies bedeutet mit anderen Worten, dass jedes spezifische Zustandssignal 76 eindeutig einer der Stationen 14 zugeordnet werden kann.

Die Systemsteuerung 16 ist also in der Lage, zu erkennen, ob und wann sich die Fahrzeuge 12-1 und 12-4 in Kontakt mit ihren jeweiligen Ladestationen 14 befinden.

Sobald dies geschehen ist, bekommt die Bedienperson 44 die Erlaubnis, den Zutrittsbereich 68-1 zu betreten, um die zweite Regalebene RE2 bzw. die zweite Fahrebene 66-2 und die dritte Regalebene RE3 bzw. die dritte Fahrebene 66-3 jeweils mit einem Fahrzeug 12 zu bestücken. Nachfolgend wird davon ausgegangen, dass die Bedienperson 44 zuerst die zweite Fahrebene 66-2 mit einem Fahrzeug 12 bestückt.

Sobald sich ein Fahrzeug 12, welches die Bedienperson 44 aus einem (nicht gezeigten) Pool auswählen kann, in der zweiten Fahrebene 66-2 befindet, kann die Bedienperson 44 mit ihrem Datenterminal 42 eine datentechnische Verbindung zu diesem Fahrzeug 12 herstellen. Die Verbindung kann mittels des Kabels 46 oder drahtlos erfolgen. Sobald das Fahrzeug 12 und das Datenterminal 42 miteinander verbunden sind, kann der Systemsteuerung 12 signalisiert werden, dass das Fahrzeug 12 zur Konfiguration bereit ist. Diese Information beinhaltet insbesondere die Fahrzeug-ID 52 (logische Adresse) des entsprechenden Fahrzeugs 12. Die Fahrzeug-ID 52 kann von der Bedienperson 44 entweder manuell eingegeben werden oder durch die Fahrzeugsteuerung 36 automatisch aus dem Fahrzeugspeicher 26 ausgelesen und an die Systemsteuerung 16 übertragen werden.

Ferner wird die spezifische Ortsadresse 54, die zur zweiten Fahrebene 66-2 gehört, als gewünschte Ortsadresse an die Systemsteuerung 16 übermittelt. Die spezifische Ortsadresse 54-2, die zur zweiten Fahrebene 66-2 gehört, lautet: "112". Diese gewünschte Ortsadresse 54 kann z.B. von der Bedienperson 44 in das Datenterminal 42 manuell eingegeben werden oder mittels eines Handscanner eingelesen werden, wobei die Fahrebene 66-2 in diesem Fall z.B. mit einem eindeutigen entsprechenden Strichcode versehen ist.

Sobald der Systemsteuerung 16 diese Informationen vorliegen, veranlasst die Systemsteuerung 16 eine Interaktion zwischen dem Fahrzeug 12, das zu konfigurieren ist, und der Station 14, die dieser Fahrebene 66-2 zugeordnet ist. Im vorliegenden Beispiel ist dies also die Station 14-2. Da es sich bei der Station 14-2 um eine Ladestation handelt, ist als Interaktion ein Aufladevorgang definiert. Die Bedienperson 44 hat das zu konfigurierende Fahrzeug 12 deshalb auf der (Lade-)Station 14-2 der Fahrebene 66-2 positioniert.

Um den Ladevorgang eindeutig identifizierbar zu machen, veranlasst die Systemsteuerung 16 ferner, dass das zu konfigurierende Fahrzeug 12 vorher bis unter einen fest vorgegebene Schwellenwerte entladen wird. Dies kann z.B. dadurch geschehen, dass die Bedienperson 22 einen Entladewiderstand 78 (vgl. Fig. 2) in das zu konfigurierende Fahrzeug 12 einsteckt oder ein verbauter Entladungswiderstand aktiviert wird. Sobald ein gewünschter Schwellenwert der Entladung erreicht ist, kann die Systemsteuerung 16 ein Wiederaufladen veranlassen und beginnen, die Zustände aller (Lade-)Stationen 14 zu überwachen. Da aber nur das zu konfigurierende Fahrzeug 12 unter den fest definierten Schwellenwert entladen wurde, bedeutet dies, dass die anderen Fahrzeuge 12 alle weniger stark entladen sind. Deshalb ist das spezifische Zustandssignal dieser Ladestation charakteristisch.

Charakteristisch bedeutet allgemein, dass sich das Zustandssignal 76 dieser Station 14 signifikant von den (spezifischen) Zustandssignalen 76 der anderen Stationen 14 unterscheidet. Somit ist die Systemsteuerung 16 in der Lage, genau zu verifizieren, welche der Stationen 14 mit dem zu konfigurierenden Fahrzeug 12 gerade agiert.

Deshalb ist die Systemsteuerung 16 ferner dazu in der Lage zu überprüfen, ob die Station 14, die das charakteristische Zustandssignal 76 liefert, die gleiche Station 14 ist, die der zu konfigurierenden Fahrebene 66-2 zugeordnet ist. Dieser Vergleich erfolgt über die spezifische Ortsadresse 54. Dies bedeutet mit anderen Worten, dass das zu konfigurierende Fahrzeug 12, wenn die spezifische Ortsadresse 54 der Station 14, die zum Laden ausgewählt wurde, mit der spezifischen Ortsadresse 54 der Station 14-3 übereinstimmt, die das charakteristische Zustandssignal 76 liefert, in die richtige Fahrebene 66 eingesetzt wurde. Wurde das zu konfigurierende Fahrzeug 12 in eine falsche Fahrebene 66 eingesetzt, erfolgt die Aufladung über die falsche Station 14. In diesem Fall stimmen die spezifischen Ortsadressen 54 nicht überein.

Die oben beschriebene Initialkonfiguration der Fahrzeuge 12 resultiert in Initial-Pairing-Daten, die durch die einander zugeordneten Ortsadressen 54 und Fahrzeug-IDs 52 definiert sind. Während der Initialkonfiguration bauen z.B. das Fahrzeug 12-1 und die Systemsteuerung 16 eine Kommunikationsverbindung miteinander auf. Solange diese Verbindung besteht, was sowohl vom Fahrzeug 12-1 als auch der Systemsteuerung z.B. basierend auf periodisch untereinander ausgetauschten Statussignalen (z.B. "Heartbeat"-Funktion bei "Profisafe") verifiziert werden kann, ist auch die Zuordnung Fahrzeug-Ort sicher gegeben.

Diese "sichere" Zuordnung ist auch dann noch gegeben, wenn die Kommunikationsverbindung vorübergehend zwischen dem Fahrzeug 12 und der Systemsteuerung 16 unterbrochen ist. Eine vorübergehende Unterbrechung kann bei der Verwendung von z.B. WLAN für die Kommunikation aus Abschattungseffekten durch metallische Regalkomponenten oder aus Funklöchern resultieren. Die Fahrzeuge 12 und die Systemsteuerung verfügen jeweils über einen Zeitgeber, um eine Dauer der Kommunikationsunterbrechung zu erfassen.

Abhängig von der Dauer einer Unterbrechung, werden verschiedene Prozesse ausgeführt. Bei einer kurzeitigen Kommunikationsunterbrechung (z.B. von weniger als 20s) wird der Betrieb des Fahrzeugs 12 fortgesetzt, ohne dass die Sicherheit als gefährdet angesehen wird. Bei einer länger andauernden Unterbrechung wechseln konventionelle Fahrzeuge in einen sogenannten STO-Modus (STO: safe torque off, siehe EN 60204), so dass eine Energieversorgung zum Antrieb sofort unterbrochen wird. Der Antrieb wird in diesem Fall ungesteuert stillgesetzt. Der Antrieb kann nach der Abschaltung kein Drehmoment mehr erzeugen, auch kein Bremsmoment, so dass ein unerwünschter Nachlauf erfolgt. Das konventionelle Fahrzeug hält irgendwo in der Regalgasse an. Zur Wiederaufnahme eines Betriebs ist es erforderlich, dass der Wartungsmechaniker in die Regalgasse einsteigt und das konventionelle Fahrzeug manuell wieder in Betrieb nimmt, eventuell inklusive einer erneuten Initialkonfiguration. Nur so ist die Sicherheit gewährleistet.

In der vorliegenden Offenbarung werden die Fahrzeuge 12 bei einer länger andauernden Kommunikationsunterbrechung von einem normalen (automatischen) Betriebsmodus in einen Rettungsmodus geschaltet. Im Rettungsmodus fahren die Fahrzeuge 12 selbstständig, d.h. automatisch, zu ihrer Ladestation 14 zurück und verharren dort, bis die Kommunikationsverbindung wieder steht.

Da das Fahrzeug 12 bereits initialkonfiguriert ist, sind die entsprechenden Daten in einem (Festwert-) Bereich des Speichers 26 des Fahrzeugs 12 dauerhaft hinterlegt. In diesem Fall verfügt das Fahrzeug 12 zumindest über eine Information, die seine Ortsadresse ausdrückt. Ein noch nicht initialkonfiguriertes Fahrzeug 12 kennt seine Ortsadresse nicht. Ein Fahrzeug 12 mit einem Fehler kennt seine Ortsadresse möglicherweise nicht (mehr) bzw. kann nicht sicher sein, dass die hinterlegte Ortsadresse richtig ist. In diesen Fällen ist es nicht möglich, eine sichere Verbindung (erneut) zwischen diesem Fahrzeug 12 und der Systemsteuerung 16 aufzubauen. Wiederum ist ein manuelles Eingreifen erforderlich, um die erforderliche Sicherheit zu gewährleisten.

Im Rettungsmodus steht das initialkonfigurierte Fahrzeug 12 also auf der ihm zugeordneten Ladestation 14 und wartet auf den Wiederaufbau der Verbindung. Wenn sich dieses Fahrzeug 12 während dieser Zeit mit seiner eigenen Energie versorgen kann, bestehen keine Bedenken, dass die im Fahrzeug hinterlegten Daten, insbesondere seine Ortsadresse 54, fehlerhaft sein könnte. Sobald die Energie wieder da ist, kann die Kommunikationsverbindung aufgebaut werden und der Betrieb des Systems 10 kann wieder aufgenommen werden, ohne dass die Fahrzeuge 12 erneut initialkonfiguriert werden müssen.

Ferner wird der oben beschriebene Verifikationsprozess erneut durchlaufen. Die Fahrzeuge 12, die in diesem Moment alle auf ihren Ladestationen stehen, werden nacheinander angewiesen, sich bis unter eine vorbestimmte Schwelle zu entladen, um anschließend wieder neu geladen zu werden, was in dem charakteristischen Zustandssignal (Ladestrom) der entsprechenden Ladestation 14 resultiert, so dass der oben beschriebene Ortsadressenvergleich für das entsprechende Fahrzeug 12 und die entsprechende Ladestation 14 durchgeführt werden kann. In diesem Fall kann das System 10 - trotz eines (längeren) Energieausfalls - sicher wieder in Betrieb genommen werden, ohne dass eine manuelle Interaktion erforderlich ist. Die Wiederinbetriebnahme erfolgt automatisch (und sicher).

Das Flussdiagramm der Fig. 4 veranschaulicht ein Verfahren zur Wiederinbetriebnahme eines automatisierten Lagersystems 10, das mehrere energieautonome Fahrzeuge 12 aufweist, die in der Regalanordnung 18 betrieben werden und die bereits konfiguriert sind, wobei eine Konfiguration eines jeweiligen Fahrzeugs 12 Initial-Pairing-Daten aufweist, die eine (eindeutige) Kennung 52 des Fahrzeugs 12 und eine Ortsadresse 54 des Fahrzeugs 12 umfassen, die einander vorab (initial) zugewiesen wurden.

Obwohl in der nachfolgenden Beschreibung des Verfahrens der Fig. 4 nur ein einziges Fahrzeug 12 betrachtet wird, so versteht es sich, dass die Beschreibung für alle Fahrzeuge 12 im System 10 gilt.

In einem Schritt S10 überprüft das Fahrzeug 12, mittels seiner Steuerung 36, die z.B. eine CPU oder einen Mikrocomputer aufweist, der auf entsprechende Prozeduren zugreifet, die im Fahrzeug-Datenspeicher 26 in Form von Programmen hinterlegt sind, ob eine Kommunikation zwischen der Fahrzeug-Steuerung 36 und der Systemsteuerung 16 länger als eine vorbestimmte Zeitdauer T1 unterbrochen ist. Es versteht sich dass die Fahrzeug-Steuerung 36 alternativ oder ergänzend durch ASICs (anwendungsspezifische integrierte Schaltung) oder Ähnliches implementiert sein kann. Die Fahrzeug-Steuerung 36 wird allgemein durch Software, Firmware und/oder Hardware implementiert.

Ferner wird davon ausgegangen, dass die Kommunikation zwischen den Fahrzeugen 12 und der Systemsteuerung 16 über ein drahtloses lokales Netzwerk (z.B. Bluetooth, WLAN, 5G o.Ä.) erfolgt. Es handelt sich um ein lokales Funknetzwerk mit ausreichend großer Sendeleistung und Reichweite, um einen kontrollierten Betrieb der Fahrzeuge 12 innerhalb der Regalanordnung 18 sicherstellen zu können. Der Betrieb der Fahrzeuge wird durch die übergeordnete Systemsteuerung (16) kontrolliert. Die Fahrzeuge 12 führen üblicherweise keine Aktion ohne Freigabe durch die Systemsteuerung 16 durch.

Die Kommunikation ist drahtlos, weil die Fahrzeuge 12 energieautonom sind, so dass meistens keine physische Verbindung zwischen der Fahrzeugsteuerung 36 und der Systemsteuerung 16 besteht. Die physische Verbindung kann z.B. bestehen, wenn das Fahrzeug 12 auf der Ladestation 14 positioniert ist (Information auf Ladestrom moduliert). Im normalen Betrieb ist das Fahrzeug 12 aber nicht auf der Ladestation 14 positioniert, sondern lagert die Lagergüter ein und aus, indem das Fahrzeug 12 gemäß Transportaufträgen, die von einem Materialflussrechner stammen und über die Systemsteuerung 16 an die Fahrzeuge 12 kommuniziert werden, zu den entsprechenden Regalplätzen fährt.

In konventionellen automatisierten Lagersystemen mit energieautonomen Fahrzeugen beträgt die vorbestimmte Zeitdauer T1 üblicherweise 20 Sekunden. Wenn eine Kommunikationsunterbrechung länger als 20 Sekunden andauert, werden die konventionellen Fahrzeuge in den oben bereits erwähnten STO-Modus versetzt, so dass deren Antriebe momentenlos geschaltet sind.

Die vorliegende Offenbarung wählt die Zeitdauer T1 üblicherweise aber größer, um insbesondere einen Neustart (Reboot) des Funknetzes zu ermöglichen. Ein Reboot eines WLAN-Access-Points (z.B. Router, nicht dargestellt) dauert aktuell ca. 35 Sekunden. Diese Zeitdauer ist abhängig vom Typ der verwendeten Komponenten, die das lokale Funknetz errichten. Im vorliegenden Beispiel beträgt die Zeitdauer T1 vorzugsweise also 35 Sekunden.

Solange die Zeitdauer T1 nicht abgelaufen ist, setzt das Fahrzeug 12 seinen (Automatik-) Betrieb fort. Dies bedeutet insbesondere, dass die Durchführung von Fahraufträgen zur Einlagerung oder Auslagerung von Lagergütern fortgesetzt wird.

Wenn die Kommunikationsunterbrechung länger als die vorbestimmte Zeitdauer T1 andauert (JA im Schritt S10) schaltet das Fahrzeug 12 in den oben bereits erwähnten Rettungsmodus. Im Rettungsmodus führt das Fahrzeug 12 eine Rettungsfahrt zu seiner Ladestation 14 durch (Schritt S12). Das Fahrzeug 12 kennt seine aktuelle X-Position innerhalb der Regalgasse 22. Ferner kennt das Fahrzeug 12 die X-Position seiner Ladestation 14 (Referenzpunkt oder Home-Position). Diese Informationen sind im Datenspeicher 26 des Fahrzeugs 12 hinterlegt. Die (aktuelle) X-Position des Fahrzeugs 12 wird periodisch aktualisiert, z.B. indem die Fahrzeug-Steuerung 36 entsprechende Informationen vom Antrieb des Fahrzeugs 12 auswertet.

Die Rettungsfahrt unterbricht die Durchführung eines aktuellen Fahrauftrags, der ebenfalls im Datenspeicher 26 des Fahrzeugs 12 hinterlegt ist. Der Abbruch des Fahrauftrags kann im Datenspeicher 26 des Fahrzeugs 12 protokolliert werden (Schritt S14). Die Protokollierung ist optional und die entsprechenden Daten werden ebenfalls im Datenspeicher 26 des Fahrzeugs hinterlegt.

Nach einem Ablauf einer zweiten vorbestimmten Zeitdauer T2 wechselt der Betriebsmodus des Fahrzeugs 12 der vorliegenden Offenbarung spätestens (und immer) vom Rettungsmodus in den herkömmlichen STO-Modus. Die zweite vorbestimmte Zeitdauer T2 ist so bemessen, dass das Fahrzeug 12 unabhängig von seiner aktuellen X-Position sicher bis zu seiner Ladestation 14 fahren kann. Die Zeitdauer T2 kann z.B. so bemessen sein, dass das Fahrzeug 12 mit einer vorab festgelegten (Rettungs-) Geschwindigkeit von einem Ende der Regalgasse 22 zum anderen Ende der Regalgasse 22 fahren kann, d.h. die volle Länge der Regalgasse durchfahren kann. Die Zeitdauer T2 beträgt in der vorliegenden Offenbarung exemplarisch 41 Sekunden, um eine Regalgasse der Länge von 150 m sicher durchfahren zu können.

Nach dem Ablauf der zweiten Zeitdauer T2 befindet sich das Fahrzeug unter normalen Umständen auf seiner Ladestation 14. Unter normalen Umständen hat das Fahrzeug 12 auch noch ausreichend Energie in seinem Energiespeicher 38, um die aktuelle X-Position in seinem Datenspeicher 26 zu hinterlegen. Die aktuelle X-Position des Fahrzeugs 12 entspricht in diesem Fall der X-Position der Ladestation 14. Dies kann in einem Schritt S18 abgefragt werden.

Wenn die Abfrage des Schritts 18 ergibt, dass sich das Fahrzeug 12 nicht auf seiner Ladestation 14 befindet, sollte dieses Fahrzeug 12 nicht automatisch wieder in Betrieb genommen werden. Dieses Fahrzeug 12 weist einen Fehler auf, weil es trotz berücksichtigter Toleranzen (z.B. Weg und Zeit) und Reserven (z.B. Energie) nicht auf seiner Ladestation 14 steht. Dieses Fahrzeug 12 muss in diesem Fall genauer inspiziert werden.

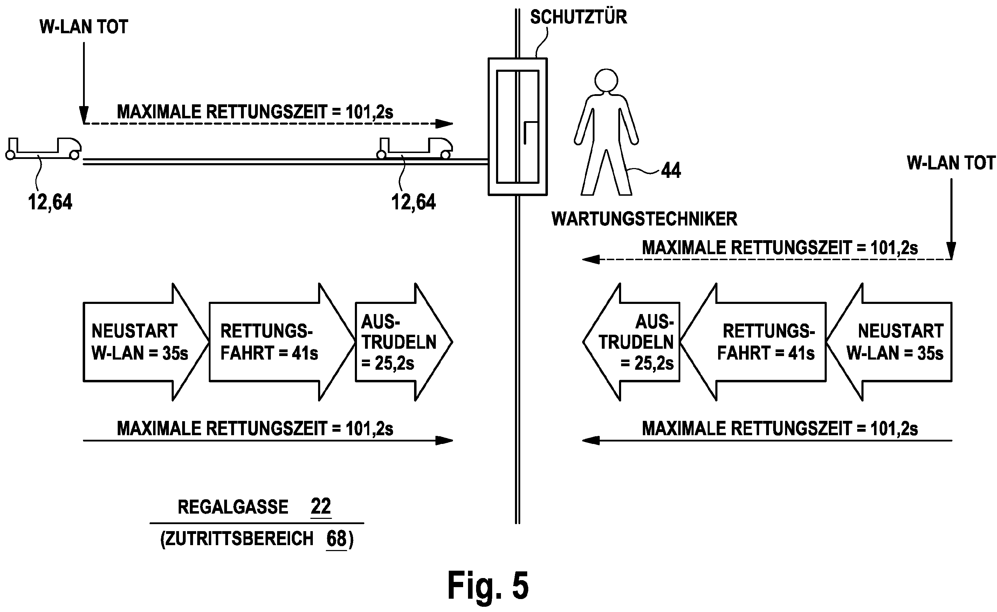

Vorzugsweise wartet die Systemsteuerung 16 eine weitere dritte vorbestimmte Zeitdauer T3 ab, bevor eine Zutrittsfreigabe erfolgt, damit der Wartungstechniker den entsprechenden Zutrittsbereich 68 auch physisch betreten kann, um das fehlerhafte Fahrzeug 12 zu inspizieren (Schritt S20). Der Wartungstechniker bewegt in diesem Fall das fehlerhafte Fahrzeug 12 auf seine Ladestation 14 (Bergung), initialkonfiguriert das Fahrzeug 12 vorzugsweise und verlässt anschließend den Zutrittsbereich 68 wieder. Die Dauer T3 beträgt z.B. 25s, was der Zeit entspricht, die das Fahrzeug 12 maximal benötigt, um mit einem drehmomentlos geschalteten Antrieb zum Halten zu kommen, weil keine aktive Bremse vorhanden ist. Der Wartungstechniker kann also spätestens nach ca. 100s (T1+T2+T3) gefahrenlos die Regalgasse betreten, siehe auch Fig. 5.

Wenn die Abfrage im Schritt S18 ergibt, dass das Fahrzeug 12 auf seiner Ladestation 14 positioniert ist (JA im Schritt S18), ist eine (optionale) Bedingung für eine automatisierte Wiederinbetriebnahme des Systems 10 gegeben.

In einem Schritt S22 prüft das Fahrzeug 12, ob die im Energiespeicher 38 verbliebene (Rest-) Energie nach der Rettungsfahrt unter eine kritische Schwelle gefallen ist. Die kritische Energieschwelle bemisst sich danach, ob im Fahrzeug 12 noch ausreichend Energie vorhanden ist, um die Fahrzeug-Steuerung 36 am Leben zu erhalten und die Kommunikationsverbindung mit der Systemsteuerung 16 wiederherzustellen und Daten für einen Pairing-Vorgang auszutauschen.

Wenn die Energieversorgung weiterhin unterbrochen ist, kann weder die Kommunikationsverbindung wiederhergestellt, noch der Energiespeicher 38 geladen werden, selbst wenn das Fahrzeug 12 auf seiner Ladestation 14 steht. Unter diesen Umständen entlädt sich das Fahrzeug 12 über die Zeit. Wenn die Abfrage im Schritt S22 ergibt, dass die Energie unter die kritische Schwelle gefallen ist, löscht das Fahrzeug 12 alle Daten aus seinem (flüchtigen) Arbeitsspeicher. Damit ist sichergestellt, dass das Fahrzeug 12 nicht aus seiner Fahrebene entnommen und in eine andere Fahrebene eingesetzt werden kann und dann immer noch davon ausgeht, es befände sich in der ursprünglichen Fahrebene. Der unten beschriebene Pairing-Vorgang kann in diesem Fall nicht durch eine bloße Quittierung auf der Ebene der Systemsteuerung 16 erfolgen Das Fahrzeug 12 muss in diesem Fall (manuell) initialkonfiguriert werden.

Wenn die Abfrage im Schritt S22 jedoch ergibt, dass noch immer ausreichend Energie vorhanden ist (NEIN im Schritt S22), überprüft das Fahrzeug 12 periodisch, ob die Kommunikationsverbindung mit der Systemsteuerung 16 wiederhergestellt ist. Diese Überprüfung wird solange wiederholt, wie (Fahrzeug-) Energie zur Verfügung steht oder bis die Kommunikationsverbindung wiederhergestellt ist.

Wenn die Kommunikationsverbindung wiederhergestellt ist (JA im Schritt S24), prüft die Fahrzeugsteuerung 36 und/oder die Systemsteuerung 16, ob im Fahrzeug 12 Initial-Pairing-Daten hinterlegt sind (Schritt S26). Diese Daten können in einem (flüchtigen) Arbeitsspeicher des Fahrzeugs hinterlegt sein, wenn das Fahrzeug während des allgemeinen Energieausfalls permanent bestromt war. Diese Daten können alternativ im nichtflüchtigen Teil des Datenspeichers 26 des Fahrzeugs 12 hinterlegt sein, wenn der Energiespeicher des Fahrzeugs 12 sich vollständig entleert hatte (siehe Schritte S22 und S23).

Wenn bei dieser Überprüfung festgestellt wird, dass gar keine Initial-Pairing-Daten vorhanden sind (NEIN im Schritt S26), ist eine manuelle Initialkonfiguration erforderlich, um das Fahrzeug 12 wieder in einen Automatikbetrieb wechseln zu lassen.

Wenn die Überprüfung aber ergibt, dass Initial-Pairing-Daten im Fahrzeug hinterlegt sind (JA im Schritt S26), fordert das Fahrzeug 12 eine Freigabe von der Systemsteuerung 16 an (Schritt S28). Das Fahrzeug 12 teilt der Systemsteuerung 16 insbesondere seine Fahrzeug-ID 52 und seine Ortsadresse 54 (Initial-Pairing-Daten) mit.

Im Schritt S30 prüft die Systemsteuerung 16 generell, ob Freigabe-Anforderungen von Fahrzeugen 12 vorliegen. Die Freigabe wird benötigt, um den STO-Modus (vgl. Schritt S16) zu beenden. Ob die Freigabe ohne manuelle Inspektion durch den Wartungstechniker erfolgen kann, kann davon abhängig gemacht werden, ob das (wiedererwachte) Fahrzeug 12 sich auf seiner Ladestation 14 befindet oder nicht (siehe Schritt S18). Befindet sich das Fahrzeug 12 auf seiner Ladestation 14, darf die Systemsteuerung 16 sicher sein, dass die Rettungsfahrt korrekt durchgeführt wurde und kann die Freigabe basierend allein auf der rückgemeldeten X-Position des Fahrzeugs 12 erteilen, um den STO-Modus zu beenden.

Der Pairing-Vorgang ist abgeschlossen, wenn die Kommunikation wieder aufgebaut ist und die Systemsteuerung 16 die Freigabe erteilt hat (Schritt S34). Es ist zu beachten, dass die Ladestation 14 selbst zu dieser Zeit nicht zwingend (bereits wieder) mit Energie versorgt sein muss. Es ist möglich, dass sich die Kommunikationsverbindung zuerst aufbaut und der Pairing-Vorgang durchgeführt wird, bevor die Ladestationen 14 ebenfalls wieder bestromt sind. Auch ist es möglich, dass die Fahrzeuge 12 (im Automatikmodus) bereits wieder Fahraufträge ausführen, obwohl die Ladestationen 14 (noch) nicht wieder bestromt sind. In diesem Fall ist nur wichtig, dass die Fahrzeuge 12 über ausreichend Energie verfügen, um den Fahrauftrag zu erledigen und zur jeweiligen Ladestation 14 zurückzukehren, wie es auch in einem Normalbetrieb der Fall ist.

Wenn eine Freigabe-Anfrage vorliegt (Ja im Schritt S30), kann die Systemsteuerung 16 ferner die übersandten Initial-Pairing-Daten zusätzlich verifizieren (Schritt S32), indem insbesondere die oben beschriebene Prozedur unter Verwendung eines charakteristischen Zustandssignals von der zugeordneten Ladestation 12 durchlaufen wird. Dies bedeutet, dass das Fahrzeug 12 speziell entladen wird und anschließend neu aufgeladen wird, um die im Fahrzeug hinterlegte Ortsadresse gegen die in der Systemsteuerung 16 hinterlegte Ortsadresse für die Ladestation 14 zu prüfen, wie es oben bereits für die Initialkonfiguration beschrieben wurde. Wenn die Ortsadressen übereinstimmen, kann die Systemsteuerung sicher sein, dass die Daten richtig sind. Dadurch erhöht sich die Sicherheit insgesamt. Das Fahrzeug 12 kann automatisiert wieder in Betrieb genommen werden.

Die Freigabe (Schritt S34) kann aber auch aufgrund anderer Kriterien durch die Systemsteuerung 16 erfolgen (z.B. durch manuelle Quittierung in einer Leitsteuerung).

Die Freigabe wird von der Systemsteuerung 16 an das entsprechende Fahrzeug 12 gesendet. Der Pairing-Vorgang ist dann abgeschlossen. Das Fahrzeug 12 wechselt wieder in einen Automatikmodus (Schritt S36). Im Automatikmodus kann das Fahrzeug 12 neue Fahraufträge empfangen, die das Fahrzeug 12 automatisch erledigt.

Fig. 5 veranschaulicht die zeitlichen Abläufe nochmals exemplarisch. Nach dem Ablauf von ca. 100s steht jedes Fahrzeug 12 sicher (entweder auf seine Ladestation 14 und fehlerhaft irgendwo in der Regalgasse 22), so dass ein mechanischer Zutrittschutz (Schutztürverriegelung) aufgehoben werden kann, um dem Wartungstechniker Zutritt zur Regalgasse 22 zu verschaffen.

### Bezugszeichenliste:

- 10: Lagersystem bzw. "System"
- 12: Fahrzeug
- 14: Station
- 16: Systemsteuerung
- 18: Regalanordnung
- 20: Regal
- 22: (Regal-) Gasse
- 24: Datenverarbeitungseinrichtung
- 26: (Daten-) Speicher
- 28: (Kommunikations-) Schnittstelle (I/O)
- 30: Leitung
- 32: Drahtlosverbindung
- 34: Bussystem
- 36: Fahrzeugsteuerung
- 38: Energiespeicher
- 40: Lastaufnahmemittel (LAM)
- 42: Datenterminal
- 44: Bedienperson
- 46: Kabel
- 48: Anzeige
- 50: Eingabeeinrichtung
- 52: Fahrzeug-ID
- 54: spezifische Ortsadresse
- 56: Netzteil von 14
- 58: Lichtschranke
- 60: Stations-ID
- 64: Shuttle
- 66: Fahrebene
- 68: Zutrittsebene
- 70: Zuordnungstabelle
- 72: (Stations-)spezifische Netzwerkadresse
- 74: (Fahrzeug-)spezifische Netzwerkadresse
- 76: (Stations-)spezifisches Zustandssignal

## Patentansprüche

1. Automatisches Lagersystem (10) mit:
einer Regalanordnung (18) mit zwei Regalen (20), die eine Regalgasse (22) zwischen sich definieren, wobei die Regale (20) mehrere Regalebenen (RE) vertikal übereinander aufweisen;
energieautonomen Fahrzeugen (12), die in der Regalgasse (22) in den Regalebenen (RE) angeordnet sind und die zum automatischen Ein- und Auslagern von Lagergütern horizontal verfahrbar sind, wobei jede der Regalebenen (RE), wo eines der Fahrzeuge (12) vorgesehen ist, mit einer Ladestation (14) ausgerüstet ist, wobei jedes der Fahrzeuge (12) initialkonfiguriert ist und eine Fahrzeug-Steuerung (36), einen Energiespeicher (38) und einen Datenspeicher (26) aufweist;
einer Systemsteuerung (16), die mit jeder der Fahrzeug-Steuerungen (36) kommuniziert; und
eine Zuordnungstabelle (70), die in einem Datenspeicher (26) der Systemsteuerung (16) hinterlegt ist und die Initial-Pairing-Daten, die einander zugeordnete Ortsadressen (54) und fahrzeugspezifische Kennungen (52) umfassen, umfasst;
wobei jede der Fahrzeug-Steuerungen (36) eingerichtet ist:
zu veranlassen, dass das entsprechende Fahrzeug (12) in einen autonomen Rettungsmodus wechselt und automatisch auf eine zugeordnete Ladestation (14) fährt, wenn eine Kommunikation zwischen der entsprechenden Fahrzeug-Steuerung (36) und der Systemsteuerung (16) länger als eine erste vorbestimmte Zeitdauer T1 unterbrochen ist; und
einen Pairing-Vorgang zu veranlassen, sobald die Kommunikation mit der Systemsteuerung (16) wiederhergestellt ist, wobei der Pairing-Vorgang basierend auf Initial-Pairing-Daten durchgeführt wird, die eine Ortsadresse und eine Kennung des jeweiligen Fahrzeugs (12), die einander fest und eindeutig zugewiesen sind, umfassen und die in einem Permanentspeicher des Fahrzeugs hinterlegt sind.

2. Automatisches Lagersystem (10) nach Anspruch 1, wobei der Pairing-Vorgang veranlasst wird, sobald die Kommunikation mit der Systemsteuerung (16) wiederhergestellt ist und sobald eine Versorgung des entsprechenden Fahrzeugs (12) mit Energie über die Ladestation (14) besteht.

3. Automatisches Lagersystem (10) nach einem der Ansprüche 1 bis 2, wobei die Kommunikation drahtlos, vorzugsweise über WLAN, erfolgt.

4. Automatisches Lagersystem (10) nach einem der Ansprüche 1 bis 3, wobei die Datenspeicher (26) der Fahrzeuge (12) jeweils einen nichtflüchtigen Bereich zur Speicherung der Initial-Pairing-Daten und einen flüchtigen Bereich zum Arbeiten für die jeweilige Fahrzeug-Steuerung (36) aufweisen.

5. Automatisches Lagersystem (10) nach einem der Ansprüche 1 bis 4, wobei die Energiespeicher (38) der Fahrzeuge (12) jeweils einen Schnelllade-Energiespeicher für Energie zum Bewegen des jeweiligen Fahrzeugs (12) und einen Stütz-Energiespeicher für Energie zum Aufrechterhalten von gespeicherten Daten und zum Ausführen von Notfunktionen durch die Fahrzeug-Steuerung (36) aufweisen.

6. Verfahren zur Wiederinbetriebnahme eines automatischen Lagersystems (10), das mehrere energieautonome Fahrzeuge (12) aufweist, die in Regalebenen (RE) einer Regalgasse (22) einer Regalanordnung (18) betrieben werden und die initialkonfiguriert sind, wobei jede der Regalebenen (RE), wo eines der Fahrzeuge (12) vorgesehen ist, mit einer Ladestation (14) ausgerüstet ist, wobei das Verfahren die Schritte aufweist:
Überprüfen (S10) durch ein jeweiliges Fahrzeug (12), ob eine Kommunikation zwischen einer Fahrzeug-Steuerung (36) des jeweiligen Fahrzeugs (12) und einer Systemsteuerung (16) des Lagersystems (10) länger als eine erste vorbestimmte Zeitdauer T1 unterbrochen ist, wobei eine Zuordnungstabelle (70) in einem Datenspeicher (26) der Systemsteuerung (16) hinterlegt ist, und wobei die Zuordnungstabelle (70) Initial-Pairing-Daten umfasst, die einander zugeordnete Ortsadressen (54) und fahrzeugspezifische Kennungen (52) umfassen;
wenn die Kommunikation länger als die erste vorbestimmte Zeitdauer T1 unterbrochen ist, wechselt das jeweilige Fahrzeug (12) in einen autonomen Rettungsmodus und fährt automatisch (S12) auf die Ladestation (14), die dem Fahrzeug (12) aus der Vielzahl von Ladestationen (14) vorab zugeordnet ist; und
Veranlassen eines Pairing-Vorgangs (S28), sobald die Kommunikation wiederhergestellt ist, wobei der Pairing-Vorgang auf Basis von Initial-Pairing-Daten erfolgt, die in einem Datenspeicher (26) des jeweiligen Fahrzeugs (12) permanent hinterlegt sind, und wobei eine Initialkonfiguration des jeweiligen Fahrzeugs (12) die Initial-Pairing-Daten aufweist, die eine Kennung des jeweiligen Fahrzeugs (12) und eine Ortsadresse des jeweiligen Fahrzeugs (12) umfassen, die einander initial zugewiesen wurden.

7. Verfahren nach Anspruch 6, wobei der Pairing-Vorgang veranlasst wird, sobald die Kommunikation wiederhergestellt ist und sobald eine Versorgung des Fahrzeugs (12) mit Energie über die Ladestation (14) besteht.

8. Verfahren nach Anspruch 6 oder 7, wobei der Schritt eines Veranlassens eines Pairing-Vorgangs umfasst, dass das jeweilige Fahrzeug (12) eine charakteristische Interaktion mit der ihm zugeordneten Ladestation (14) durchführt und die Ortsadresse des jeweiligen Fahrzeugs (12) mit einer Ortsadresse verglichen wird, die der entsprechenden Ladestation (14) zugewiesen ist, die ein charakteristisches Zustandssignal in Reaktion auf die charakteristische Interaktion des jeweiligen Fahrzeugs (12) liefert.

9. Verfahren nach einem der Ansprüche 6 bis 8, wobei das jeweilige Fahrzeug (12) nach Ablauf einer zweiten vorbestimmten Zeitdauer T2, die sich an die erste vorbestimmte Zeitdauer T1 anschließt, in einen antriebslosen Betriebsmodus wechselt.

10. Verfahren nach einem der Ansprüche 6 bis 9, das ferner aufweist:
periodisches Prüfen, ob die Kommunikation zwischen der jeweiligen Fahrzeug-Steuerung (36) und der Systemsteuerung (16) nach der Unterbrechung wieder hergestellt ist.

11. Verfahren nach Anspruch 10, das ferner aufweist:
Anfordern eines Freigabe-Signals durch die jeweilige Fahrzeug-Steuerung (36) bei der Systemsteuerung (16), nachdem die Kommunikation wieder hergestellt ist.

12. Verfahren nach einem der Ansprüche 6 bis 11, wobei ein Kommunikationsabbruch vom jeweiligen Fahrzeug (12) in seinem Datenspeicher (26) protokolliert wird.

13. Verfahren nach einem der Ansprüche 6 bis 12, das ferner aufweist:
Überprüfen, ob das jeweilige Fahrzeug (12) auf der vorab zugeordneten Ladestation (4) positioniert ist, nachdem das jeweilige Fahrzeug (12) in den Rettungsmodus gewechselt hat.

## Claims

1. An automated storage system (10) including:
a rack arrangement (18) including two racks (20), which define a rack aisle (22) between them, wherein the racks (20) comprise multiple rack levels (RE) vertically on top of each other;
energy-autonomous vehicles (12) arranged in the rack aisle (22) on the rack levels (RE) and being horizontally movable for automatically storing and retrieving storage goods, wherein each of the rack levels (RE), where one of the vehicles (20) is provided, is equipped with a charging station (14), wherein each of the vehicles (12) is initial-configured and comprises a vehicle control (36), an energy storage (38), and a data storage (26);
a system control (16) communicating with each of the vehicle controls (36); and
an assignment table (70), which is stored in a data storage (26) of the system control (16) and which includes initial-pairing data including mutually assigned location addresses (54) and vehicle-specific identifiers (52);
wherein each of the vehicle controls (36) is configured:
to cause the corresponding vehicle (12) to switch into an autonomous rescue mode and to automatically move to an assigned charging station (14), if communication between the corresponding vehicle control (36) and the system control (16) has been interrupted for longer than a first predetermined time period T1; and
to initiate a pairing process as soon as the communication with the system control (16) is restored, wherein the pairing process is performed based on initial-pairing data including a location address and an identifier of the respective vehicle (12), which are fixedly and uniquely assigned to each other, and being stored in a permanent memory of the vehicle.

2. The automated storage system (10) of claim 1, wherein the pairing process is initiated as soon as the communication with the system control (16) is restored and as soon as supply of the respective vehicle (12) with energy via the charging station (14) exists.

3. The automated storage system (10) of one of claims 1 to 2, wherein the communication is wireless, preferably via WLAN.

4. The automated storage system (10) of any one of claims 1 to 3, wherein the data storages (26) of the vehicles (12) respectively comprise a non-volatile area for storing the initial-pairing data and a volatile area for processing by the respective vehicle control (36).

5. The automated storage system (10) of any one of claims 1 to 4, wherein the energy storages (38) of the vehicles (12) respectively comprise a fast-charging energy storage for energy to move the respective vehicle (12) and a backup-energy storage for energy to maintain stored data and to execute emergency functions by the vehicle control (36).

6. A method for restarting an automated storage system (10), which comprises multiple energy-autonomous vehicles (12) operated on rack levels (RE) of a rack aisle (22) of a rack arrangement (18) and being initial-configured, wherein each of the rack levels (RE), where one of the vehicles (12) is provided, is equipped with a charging station (14), wherein the method comprises the steps of:
checking (S10), by a respective vehicle (12), whether communication between a vehicle control (36) of the respective vehicle (12) and a system control (16) of the storage system (10) has been interrupted for longer than a first predetermined time period T1, wherein an assignment table (70) is stored in a data storage (26) of the system control (16), and wherein the assignment table (70) includes initial-pairing data including mutually assigned location addresses (54) and vehicle-specific identifiers (52);
if the communication has been interrupted for longer than the first predetermined time period T1, the respective vehicle (12) switches into an autonomous rescue mode and automatically moves (S12) to the charging station (14), which is assigned in advance to the vehicle (12) from the plurality of charging stations (14); and
initiating a pairing process (S28) as soon as the communication is restored, wherein the pairing process is performed based on initial-pairing data stored permanently in a data storage (26) of the respective vehicle (12), and wherein an initial configuration of the respective vehicle (12) comprises the initial-pairing data including an identifier of the respective vehicle (12) and a location address of the respective vehicle (12) which have been initially assigned to each other.

7. The method of claim 6, wherein the pairing process is initiated as soon as the communication is restored and as soon as supply of the vehicle (12) with energy via the charging station (14) exists.

8. The method of claim 6 or 7, wherein the step of initiating a pairing process includes that the respective vehicle (12) performs a characteristic interaction with its assigned charging station (14) and compares the location address of the respective vehicle (12) with a location address assigned to the corresponding charging station (14), which delivers a characteristic state signal in response to the characteristic interaction of the respective vehicle (12).

9. The method of any one of claims 6 to 8, wherein the respective vehicle (12), after expiry of a second predetermined time period T2 following the first predetermined time period T1, switches into a non-driven operation mode.

10. The method of any one of claims 6 to 9 further comprising:
periodically checking whether the communication between the respective vehicle control (36) and the system control (16) has been restored after the interruption.

11. The method of claim 10 further comprising:
requesting a release signal, by the respective vehicle control (36), from the system control (16) after the communication has been restored.

12. The method of any one of claims 6 to 11, wherein communication interruption is logged by the respective vehicle (12) in its data storage (26).

13. The method of any one of claims 6 to 12 further comprising:
checking whether the respective vehicle (12) is positioned on the charging station (4) assigned in advance, after the respective vehicle (12) has switched into the rescue mode.

## Revendications

1. Système de stockage (10) automatique comportant :
un agencement de rayonnages (18) comportant deux rayonnages (20) définissant une allée de rayonnages (22) entre eux, dans lequel les rayonnages (20) présentent plusieurs niveaux de rayonnages (RE) superposés verticalement ;
des véhicules (12) autonomes en énergie disposés dans l'allée de rayonnages (22) dans les niveaux de rayonnages (RE) et pouvant être déplacés horizontalement pour le stockage et le déstockage automatiques de marchandises à stocker, dans lequel chacun des niveaux de rayonnages (RE) où l'un des véhicules (12) est prévu est équipé d'une station de chargement (14), dans lequel chacun des véhicules (12) est initialement configuré et présente un dispositif de commande de véhicule (36), un accumulateur d'énergie (38) et une mémoire de données (26) ;
un dispositif de commande de système (16) communiquant avec chacun des dispositifs de commande de véhicule (36) ; et
un tableau d'attribution (70) enregistré dans une mémoire de données (26) du dispositif de commande de système (16) et comprenant des données d'appariement initial qui comprennent des adresses locales (54) et des identifiants (52) spécifiques au véhicule attribués les uns aux autres ;
dans lequel chacun des dispositifs de commande de véhicule (36) est configuré pour :
amener le véhicule (12) correspondant à passer dans un mode sauvetage autonome et à se rendre automatiquement à une station de chargement (14) attribuée lorsqu'une communication entre le dispositif de commande de véhicule (36) correspondant et le dispositif de commande de système (16) est interrompue plus longtemps qu'une première durée T1 prédéterminée ; et
provoquer un processus d'appariement dès que la communication avec le dispositif de commande de système (16) est rétablie, dans lequel le processus d'appariement est effectué sur la base de données d'appariement initial comprenant une adresse locale et un identifiant du véhicule (12) respectif, lesquelles sont associées de manière fixe et unique l'une à l'autre et sont enregistrées dans une mémoire permanente du véhicule.

2. Système de stockage (10) automatique selon la revendication 1, dans lequel le processus d'appariement est provoqué dès que la communication avec le dispositif de commande de système (16) est rétablie et dès qu'une alimentation en énergie du véhicule (12) correspondant par l'intermédiaire de la station de chargement (14) est présente.

3. Système de stockage (10) automatique selon l'une des revendications 1 à 2, dans lequel la communication est effectuée sans fil, de préférence par l'intermédiaire d'un WLAN.

4. Système de stockage (10) automatique selon l'une des revendications 1 à 3, dans lequel les mémoires de données (26) des véhicules (12) présentent respectivement une zone non volatile pour la mémorisation des données d'appariement initial et une zone volatile pour le traitement pour le dispositif de commande de véhicule (36) respectif.

5. Système de stockage (10) automatique selon l'une des revendications 1 à 4, dans lequel les accumulateurs d'énergie (38) des véhicules (12) présentent respectivement un accumulateur d'énergie à chargement rapide pour l'énergie destinée à déplacer le véhicule (12) respectif et un accumulateur d'énergie de soutien pour l'énergie destinée à conserver les données mémorisées et à exécuter des fonctions d'urgence par le dispositif de commande de véhicule (36).

6. Procédé permettant la remise en fonctionnement d'un système de stockage (10) automatique présentant plusieurs véhicules (12) autonomes en énergie qui fonctionnent dans des niveaux de rayonnages (RE) d'une allée de rayonnages (22) d'un agencement de rayonnages (18) et qui sont initialement configurés, dans lequel chacun des niveaux de rayonnages (RE) où l'un des véhicules (12) est prévu est équipé d'une station de chargement (14), dans lequel le procédé présente les étapes consistant à :
vérifier (S10), par un véhicule (12) respectif, si une communication entre un dispositif de commande de véhicule (36) du véhicule (12) respectif et un dispositif de commande de système (16) du système de stockage (10) est interrompue plus longtemps qu'une première durée T1 prédéterminée, dans lequel un tableau d'attribution (70) est enregistré dans une mémoire de données (26) du dispositif de commande de système (16), et dans lequel le tableau d'attribution (70) comprend des données d'appariement initial comprenant des adresses locales (54) et des identifiants (52) spécifiques au véhicule attribués les uns aux autres ;
si la communication est interrompue plus longtemps que la première durée T1 prédéterminée, le véhicule (12) respectif passe dans un mode sauvetage autonome et se rend automatiquement (S12) à la station de chargement (14) qui est attribuée préalablement au véhicule (12) parmi la pluralité de stations de chargement (14) ; et
provoquer un processus d'appariement (S28) dès que la communication est rétablie, dans lequel le processus d'appariement est effectué sur la base de données d'appariement initial enregistrées en permanence dans une mémoire de données (26) du véhicule (12) respectif, et dans lequel une configuration initiale du véhicule (12) respectif présente les données d'appariement initial comprenant un identifiant du véhicule (12) respectif et une adresse locale du véhicule (12) respectif initialement associés l'un à l'autre.

7. Procédé selon la revendication 6, dans lequel le processus d'appariement est provoqué dès que la communication est rétablie et dès qu'une alimentation en énergie du véhicule (12) par l'intermédiaire de la station de chargement (14) est présente.

8. Procédé selon la revendication 6 ou 7, dans lequel l'étape de provocation d'un processus d'appariement comprend l'exécution par le véhicule (12) respectif d'une interaction caractéristique avec la station de chargement (14) qui lui est attribuée, et la comparaison de l'adresse locale du véhicule (12) respectif avec une adresse locale associée à la station de chargement (14) correspondante fournissant un signal d'état caractéristique en réponse à l'interaction caractéristique du véhicule (12) respectif.

9. Procédé selon l'une des revendications 6 à 8, dans lequel le véhicule (12) respectif passe dans un mode de fonctionnement sans entraînement après un écoulement d'une seconde durée T2 prédéterminée qui suit la première durée T1 prédéterminée.

10. Procédé selon l'une des revendications 6 à 9, présentant en outre :
le fait de contrôler périodiquement si la communication entre le dispositif de commande de véhicule (36) respectif et le dispositif de commande de système (16) est rétablie après l'interruption.

11. Procédé selon la revendication 10, présentant en outre :
la demande d'un signal de libération par le dispositif de commande de véhicule (36) respectif au dispositif de commande de système (16) après le rétablissement de la communication.

12. Procédé selon l'une des revendications 6 à 11, dans lequel une interruption de communication est consignée par le véhicule (12) respectif dans sa mémoire de données (26).

13. Procédé selon l'une des revendications 6 à 12, présentant en outre :
le fait de vérifier que le véhicule (12) respectif est positionné sur la station de chargement (4) préalablement attribuée après que le véhicule (12) respectif est passé en mode sauvetage.
